# EUROPÄISCHE PATENTSCHRIFT

(11) **EP 2 054 869 B1**
(45) Veröffentlichungstag und Bekanntmachung des Hinweises auf die Patenterteilung: **09.02.2011**
(21) Anmeldenummer: 07786878.4
(22) Anmeldetag: 28.06.2007
(51) Int. Cl.: G08G 1/16

(54) **VERFAHREN UND VORRICHTUNG ZUR FAHRERASSISTENZ DURCH ERZEUGUNG VON SPURINFORMATIONEN ZUR UNTERSTÜTZUNG ODER ZUM ERSATZ VON SPURINFORMATIONEN EINER VIDEOBASIERTEN SPURINFORMATIONSEINRICHTUNG**
METHOD AND APPARATUS FOR DRIVER ASSISTANCE THROUGH THE PRODUCTION OF LANE INFORMATION FOR SUPPORTING OR REPLACING LANE INFORMATION FROM A VIDEO-BASED LANE INFORMATION DEVICE
PROCÉDÉ ET DISPOSITIF D'ASSISTANCE AU CONDUCTEUR PAR GÉNÉRATION D'INFORMATIONS CONCERNANT LA VOIE DE ROULEMENT POUR COMPLÉTER OU REMPLACER DES INFORMATIONS CONCERNANT LA VOIE DE ROULEMENT FOURNIES PAR UN ÉQUIPEMENT D'INFORMATION SUR LA VOIE DE ROULEMENT BASÉ SUR VIDÉO

(30) Priorität: 14.08.2006 DE 102006038018
(43) Veröffentlichungstag der Anmeldung: 06.05.2009
(73) Patentinhaber: Robert Bosch GmbH, 70442 Stuttgart (DE)
(72) Erfinder: BECKER, Jan-Carsten, 71701 Schwieberdingen (DE)
(86) Internationale Anmeldenummer: PCT/EP2007/056476
(87) Internationale Veröffentlichungsnummer: WO 2008/019907

(56) Entgegenhaltungen:
- EP-A1- 1 304 607
- DE-A1-102005 029 662
- US-A1- 2004 138 809
- TOYOTA K ET AL: "A proposal of HIR (human-oriented image restructuring) system for ITS" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 540-544, XP010528993 ISBN: 0-7803-6363-9

## Beschreibung

### Stand der Technik

Die vorliegende Erfindung betrifft Verfahren und Vorrichtung zur Fahrerassistenz durch Erzeugung von Spurinformationen zur Unterstützung oder zum Ersatz von Spurinformationen einer videobasierten Spurinformationseinrichtung.

Zur Erhöhung von Komfort und Fahrsicherheit existieren Fahrerassistenzsysteme für Kraftfahrzeuge, insbesondere Fahrerassistenzsysteme zur Querführung (laterale Führung). Derzeit sind fortgeschrittene Fahrerassistenzsysteme zur Querführung in der Entwicklung bzw. in der Vorserienreife, die den Fahrer vor dem unbeabsichtigten Verlassen der eigenen Fahrspur warnen (Lane Departure Waming - LDW) oder den Fahrer beim Halten der eigenen Fahrspur während der Fahrt unterstützen (Lane Keeping Support - LKS). Die Anforderungen dieser Systeme an die Genauigkeit und Qualität der Spurinformationen sind wesentlich höher als diejenigen von Fahrerassistenzsystemen zur Längsführung (ACC).

Fahrerassistenzsysteme zur Querführung arbeiten üblicherweise mit einer Video-SensorEinrichtung. Beispielsweise wird durch eine Videokamera zyklisch ein Bild der Straße vor dem Fahrzeug aufgenommen, und in diesem Bild werden durch geeignete Algorithmen die fahrbaren Markierungen erkannt und durch ein mathematisches Modell beschrieben. Derartige videobasierte Sensorsysteme benötigen freie Sicht auf die Fahrbahnmarkierungen. Ist die Sicht ganz oder teilweise verdeckt, wie es beispielsweise in Stausituationen häufig durch dicht vorausfahrende Fahrzeuge vorkommt, dann stehen keine oder nur unvollständige Spurinformationen zur Verfügung. Ebenso schlägt die videobasierte Spurerfassung häufig fehl, wenn die Fahrbahnmarkierung verschmutzt ist oder die Farbe der Fahrbahnmarkierung alt oder schlecht sichtbar ist oder wenn gar keine Fahrbahnmarkierung vorhanden ist.

Ein modernes Kraftfahrzeug besitzt üblicherweise einen Lenkwinkelsensor, einen Gierratensensor und Beschleunigungssensoren, mit denen durch ein Fahrzeugmodell die aktuelle Fahrzeugbewegung geschätzt bzw. fortgeschrieben werden kann. Insbesondere mit dem Gierratensignal des Gierratensensors kann die Krümmung des Kurses, den das Fahrzeug aktuell abfährt, zu jeder Zeit bestimmt werden.

Navigationsgeräte für Kraftfahrzeuge besitzen eine Vorrichtung zur Bestimmung der Fahizeugposition, welche in der Regel GPS-basiert ist, mittels derer die Bestimmung der aktuellen Position des Fahrzeuges auf einige Meter genau erfolgen kann.

Systeme zur Fahrzeug-Fahrzeug-Kommunikation befinden sich derzeit in Entwicklung. Ein Beispiel dafür ist das "Car-2-Car Communication Consortium" (C2C CC), dem die Automobilhersteller Audi, BMW/Mini, DaimlerChrysler, Fiat, Renault und Volkswagen angehören. Neben der Erarbeitung eines offenen Industriestandards für die Kommunikation zwischen Fahrzeugen und zwischen Fahrzeugen und Infrastruktureinrichtungen auf europäischer Ebene soll das "C2C CC" die Zuteilung einer dafür notwendigen Funkfrequenz vorantreiben sowie entsprechende Funksysteme entwickeln und testen.

Eine beispielhafte Anwendung für die Fahrzeug-zu-Fahrzeug-Kommunikation ist die gezielte Weitergabe von Informationen an andere Autofahrer. Gerät ein Fahrzeug beispielsweise in eine kritische Situation, wie Stau, Nebel, Glatteis, Unfall o.A., gibt es die entsprechenden Informationen an alle betroffenen Verkehrsteilnehmer im unmittelbaren Umkreis der Gefahrenstelle weiter. Der nachfolgende Verkehr wird rechtzeitig gewarnt und kann situationsgerecht reagieren. Jedes Fahrzeug kann in einem derartigen spontanen Informationsverbund die Rolle des Senders, Empfängers oder Vermittlers (Routers) übernehmen. Dadurch baut sich ähnlich eines Staffellaufs eine Informationskette auf. Durch ein derartiges "Multi-Hopping"-Verfahren lassen sich die Informationen über eine größere Entfernung weitertragen. Realisiert wird der Datenaustausch zwischen den Fahrzeugen mit "Ad-hoc-Netzen". Diese Kurzstreckenverbindungen bauen sich bei Bedarf spontan zwischen Fahrzeugen auf, organisieren sich selbst und benötigen dazu keine externe Infrastruktur. Die von Computeranlagen bekannte WLAN-Technologie bildet die technologische Basis dafür.

Weiterhin existieren Verfahren und Vorrichtungen zur Ermittlung von Fahrspurverlaufsdaten aus Detektionen vorausfahrender Fahrzeuge durch objekterkennende Sensoren, wie z.B. Radar, Lidar oder Video, wie beispielsweise in der DE 103 54 650 A1 oder DE 103 49 631 A1 offenbart. Diese Sensoren besitzen aber einen sehr eingeschränkten, auf ihre eigentliche Aufgabe zugeschnittenen Erfassungsbereich. Weiterhin erfassen diese Sensoren alle Arten von Objekten, weshalb eine zusätzliche Unterscheidung in für die Fahrspurstützung relevante und nicht-relevante Objekte erforderlich wird.

Die EP 1 304 607 A1 beschreibt ein videobasiertes Verfahren, welches vier Bildverarbeitungsalgorithmen verwendet, um mittels eines Videosensors eines Fahrzeugs eine Fahrspur zu bestimmen, auf der sich das Fahrzeug bewegt. Die Bildverarbeitungsalgorithmen sind so ausgelegt, dass sie jeweils unterschiedliche Merkmale einer Fahrbahn erkennen, aus welchen dann auf die Position des Fahrzeugs geschlossen werden kann.

Die US 2004/0138809 A1 offenbart eine Vorrichtung zur Fahrzeug-zu-Fahrzeug-Kommunikation und deren Verwendung zum Austausch von speziellen Informationen in Abhängigkeit von bestimmten Verkehrssituationen.

Digitale Karten für Fahrzeug-Navigationssysteme besitzen eine Auflösung und Genauigkeit, die für die Navigationsaufgabe zwar ausreichend ist, für zukünftige Fahrerassistenzsysteme, beispielsweise zur Querführung in der Fahrspur, bei weitem nicht ausreichend ist. Weiterhin sind digitale Karten für Fahrzeug-Navigationssysteme, die derzeit üblicherweise auf Speichermedien, wie z.B. CDs oder DVDs, abgespeichert sind, grundsätzlich zum Zeitpunkt der Benutzung veraltet, da sie nur den zu ihrem Erstellungszeitpunkt gültigen Datensatz fest gespeichert haben.

### Vorteile der Erfindung

Das erfindungsgemäße Verfahren nach Anspruch 1 bzw. die entsprechende Vorrichtung nach Anspruch 7 weisen den Vorteil auf, dass sie in Situationen, in denen es zur teilweisen oder vollständigen Verdeckung der Fahrbahnmarkierung und damit zu teilweisem oder vollständigem Ausfall des videobasierten Spurinformationssystems kommt, dem Fahrer durch Unterstützung bzw. im Ersatz von videobasierten Spurinformationen durch Navigations-basierte Positionsdaten und/oder Bewegungsdaten und/oder Fahrspurdaten von anderen Fahrzeugen über Fahrzeug-Fahrzeug-Kommunikation wertvolle Unterstützung liefern.

Die der vorliegenden Erfindung zugrunde liegende Idee besteht in der Generierung von Spurinformationen bei Ausfall einer videobasierten Spurerkennung bzw. zur Unterstützung einer videobasierten Spurerkennung durch Bewegungsdaten von anderen Fahrzeugen über eine Fahrzeug-Fahrzeug-Kommunikationseinrichtung, insbesondere für Stausituationen, in denen es häufig zur Verdeckung der Fahrspur durch vorausfahrende Fahrzeuge und damit zum teilweisen oder vollständigen Ausfall der videobasierten Spurerkennung kommt.

Die in den Unteransprüchen aufgeführten Maßnahmen sind vorteilhafte Weiterbildungen und Verbesserungen des jeweiligen Gegenstandes der Erfindung.

Gemäß einer bevorzugten Weiterbildung umfasst der Zuverlässigkeitsparameter eine Qualität und/oder eine Reichweite.

Gemäß einer bevorzugten Weiterbildung werden die Navigationssystem-basierten Spurinformationen von einer Mehrzahl von Fremdfahrzeugen über die Fahrzeug-Fahrzeug-Kommunikationseinrichtung empfangen und an ein vorgegebenes Spurmodell angefittet.

Gemäß einer bevorzugten Weiterbildung werden Navigationssystem-basierte Spurinformationen von mindestens einem entgegenkommenden Fremdfahrzeug über die Fahrzeug-Fahrzeug-Kommunikationseinrichtung empfangen und auf die eigene Fahrspur transformiert.

Gemäß einer bevorzugten Weiterbildung wird den Navigationssystem-basierten Spurinformationen von der Mehrzahl von Fremdfahrzeugen eine jeweilige Kennung entsprechend dem sie aussendenden Fremdfahrzeug zugeordnet.

Gemäß einer bevorzugten Weiterbildung werden die Navigationssystem-basierten Spurinformationen von der Mehrzahl von Fremdfahrzeugen einer Plausibilisierung hinsichtlich der Fahrtrichtung unterworfen.

### Zeichnungen

Ausführungsbeispiele der Erfindung sind in der Zeichnung dargestellt und in der nachfolgenden Beschreibung näher erläutert.

Es zeigen:
Fig. 1 eine Straßenverkehrssituationsdarstellung zur Erläuterung einer Ausführungsform des erfindungsgemäßen Verfahrens zur Fahrerassistenz durch Erzeugung von Spurinformationen zur Unterstützung oder zum Ersatz von Spurinformationen einer videobasierten Spurinformationseinrichtung;
Fig. 2 ein Blockdiagramm zur Erläuterung einer Ausführungsform der erfindungsgemäßen Vorrichtung zur Fahrerassistenz durch Erzeugung von Spurinformationen zur Unterstützung oder zum Ersatz von Spurinformationen einer videobasierten Spurinformationseinrichtung;
Fig. 3 ein weiteres Blockdiagramm zur Erläuterung der Ausführungsform der erfindungsgemäßen Vorrichtung zur Fahrerassistenz durch Erzeugung von Spurinformationen zur Unterstützung oder zum Ersatz von Spurinformationen einer videobasierten Spurinformationseinrichtung; und
Fig. 4 ein Fliessdiagramm zur Erläuterung der wesentlichen Schritte der Ausführungsform des erfindungsgemäßen Verfahrens zur Fahrerassistenz durch Erzeugung von Spurinformationen zur Unterstützung oder zum Ersatz von Spurinformationen einer videobasierten Spurinformationseinrichtung.

### Beschreibung des Ausführungsbeispiels

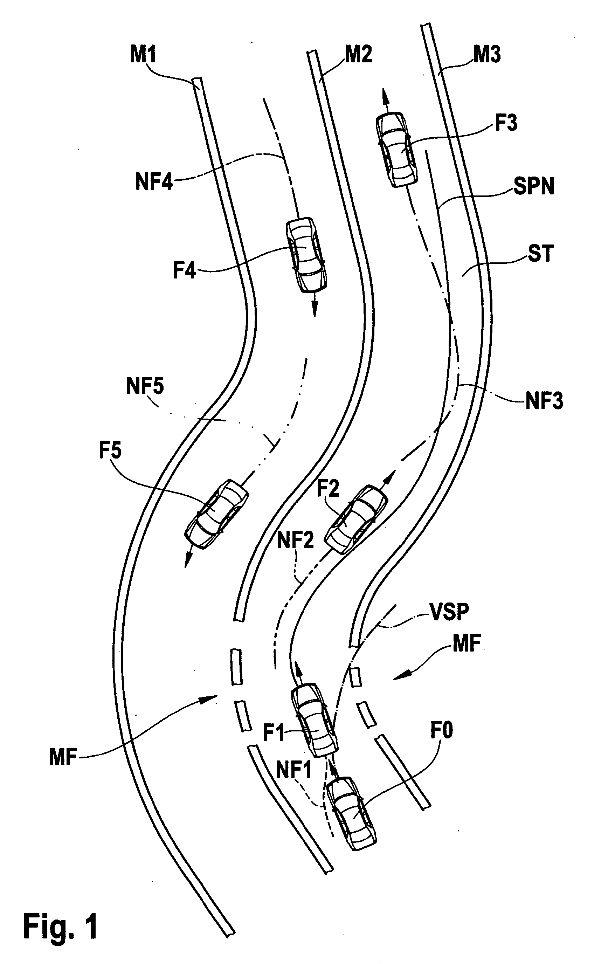

Fig. 1 zeigt eine Straßenverkehrssituationsdarstellung zur Erläuterung einer Ausführungsform des erfindungsgemäßen Verfahrens zur Fahrerassistenz durch Erzeugung von Spurinformationen zur Unterstützung oder zum Ersatz von Spurinformationen einer videobasierten Spurinformationseinrichtung.

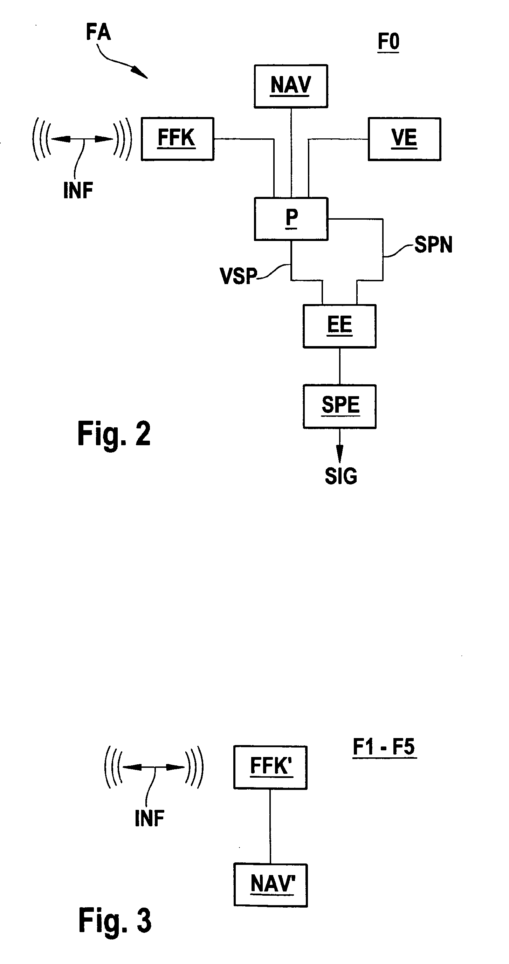

In Fig. 1 bezeichnet Bezugszeichen ST eine Straßenfahrbahn mit Fahrbahnmarkierungen M1, M2, M3. In Fahrtrichtung eines Fahrzeuges F0, welches mit einem Fahrerassistenzsystem FA mit einem Navigationssystem NAV, einer Fahrzeug-Fahrzeug-Kommunikationseinrichtung FFK und einer videobasierten Spurerkennungseinrichtung VE ausgestattet ist (siehe Fig. 2), bezeichnet M1 den linken Seitenstreifen, M2 den Mittelstreifen und M3 den rechten Seitenstreifen. Bezugszeichen MF bezeichnet einen Bereich, in dem der Mittelstreifen M2 aufgrund von Verschmutzung für die videobasierte Spurerkennungseinrichtung VE des Fahrzeugs F0 nicht sichtbar ist. Ebenfalls nicht sichtbar für die videobasierte Spurerkennungseinrichtung VE des Fahrzeugs F0 ist in diesem Bereich MF ist die rechte Seitenmarkierung M3, welche zwar vorhanden ist, jedoch durch das sehr dicht vorausfahrende Fahrzeug F1 für die videobasierte Spurerkennungseinrichtung VE verdeckt ist.

Somit liefert eine Verarbeitungseinrichtung P des Fahrerassistenzsystems FA des Fahrzeugs F0 eine videobasierte prognostizierte Fahrspur VSP, welche den tatsächlichen Verlauf der Straßenfahrbahn ST nur im Nahbereich gut wiedergibt, im Fernbereich jedoch stark vom Verlauf der Straßenfahrbahn ST abweicht, wie Fig. 1 deutlich entnehmbar.

Die gemäß Fig. 3 mit einem Navigationssystem NAV' und einer entsprechenden Fahrzeug-Fahrzeug-Kommunikationseinrichtung FFK' ausgestatteten Fahrzeuge F1, F2, F3, F4, F5 senden in regelmäßigen zeitlichen Abständen Spurinformationen INF über ihren Fahrzeugzustand, insbesondere ihre Absolutposition, Kursrichtung und die Gierrate an die Fahrzeug-Fahrzeug-Kommunikationseinrichtung FFK des Fahrzeugs F0. Optional, aber nicht notwendigerweise, falls beispielsweise Datenschutzgründe dagegen sprechen, senden die Fahrzeug F1 bis F5 mit den Informationen INF eine eindeutige Kennung, um eine Zuordnung von Daten unterschiedlicher Zeitpunkte zu einem bestimmten Fahrzeug dem Fahrzeug F0 zu ermöglichen. Das Fahrzeug F0 sendet ebenfalls seine eigenen Spurinformationen INF über den Fahrzeugzustand, insbesondere die durch die videobasierte Spurerkennungseinrichtung VE erfasste laterale Position auf der Straßenfahrbahn ST sowie bei mehrspurigen Straßen die befahrene Spur, sofern bestimmbar, aus.

Sofern es die verfügbare Übertragungsbandbreite zulässt, wird der jeweilige detektierte Spurverlauf der Fahrzeuge F0-F5 in einer geeigneten Kurvenform, z.B. als Polygonzug, Polynom zweiter oder dritter Ordnung, Spline o.ä. zusammen mit dem Erfassungsbereich ebenfalls über die Fahrzeug-Fahrzeug-Kommunikationseinrichtung FFK mit den Informationen INF versendet. Derartige Kurven sind in Fig. 1 mit NF1-NF5 entsprechend den Fahrzeugen F1-F5.

Die übrigen Fahrzeuge F1 bis F5 empfangen diese Spurinformationen INF des Fahrzeugs F0 und leiten sie wiederum an weitere (nicht gezeigte) Fahrzeuge weiter, wobei als zusätzliches Kriterium denkbar ist, dass beispielsweise nur Daten von Fahrzeugen innerhalb einer bestimmten Entfernung weitergeleitet werden, um die Datenmenge zu begrenzen bzw. die unmittelbare Gültigkeit der Daten zu gewährleisten.

Das Fahrzeug F0, das zusätzliche Spurinformationen INF von den Fahrzeugen F1-F5 für sein Fahrerassistenzsystem FA zur Fahrzeugquerführung benötigt, empfängt die oben erwähnten Spurinformationen INF der übrigen Fahrzeuge F1 bis F5, wobei eine Filterung der Daten denkbar ist, so dass beispielsweise nur Daten von Fahrzeugen empfangen/ausgewertet werden, die sich beispielsweise innerhalb einer bestimmten Entfernung befinden oder die sich in eine bestimmte Richtung (beispielsweise in der eigenen Fahrtrichtung) bewegen.

Die Verarbeitungseinrichtung P des Fahrerassistenzsystems FA des Fahrzeugs F0 berechnet aus den empfangenen und gegebenenfalls gefilterten Spurinformationen INF eine Navigations-basierte Fahrspur SPN, welche in Fig. 1 durch die durchgezogene Linie bezeichnet ist.

Eine Ermittlungseinrichtung EE des Fahrerassistenzsystems FA des Fahrzeugs F0 vergleicht aufgrund vorbestimmter Kriterien die Qualität der videobasierten Spurdaten VSP und die Qualität der Navigationssystem-basierten Spurdaten SPN, z.B. Kriterium Vorhersagegenauigkeit bzw. -reichweite.

Die Ermittlungseinrichtung EE des Fahrerassistenzsystems FA des Fahrzeugs F0 kommt in der Situation gemäß Fig. 1 zum Ergebnis, dass aufgrund der wenigen Stützpunkte die videobasierten Spurdaten VSP eine wesentlich schlechtere Vorhersage liefern als die Navigationssystem-basierten Spurdaten SPN.

Das Fahrzeug F0 zieht daher zur Spurprognose mittels einer Spurprognoseeinrichtung SPE die Navigationssystem-basierten Spurdaten SPN heran. In diesem Zusammenhang werden die Absolutposition, Ausrichtung und Ausrichtungsänderung (ermittelbar aus der jeweiligen unmittelbar gemessenen Fahrzeug-Gierrate) der anderen Fahrzeuge F1 bis F5 als Stützpunkte in einer virtuellen Karte interpretiert und in einer Liste abgespeichert. Zusätzlich können zur Ermittlung der Spurprognose die Spurdaten der entgegenkommenden Fahrzeuge F4, F5 von der Gegenfahrbahn auf die eigene Fahrbahn transformiert werden, wobei beispielsweise eine zuvor bestimmte Fahrbahnbreite hinzugezogen wird.

Im vorliegenden Fall werden die von den Fahrzeugen F4, F5 übertragenen Spurdaten nach einer Plausibilisierung verworfen werden, da sie nicht zur eigenen Fahrtrichtung bzw. Fahrspur passen. Unter Verwendung der der eigenen Fahrspur zugeordneten Stützpunkte NF1, NF2, NF3 der Fahrzeuge F1-F3 werden dabei mittels einer Kurvenregression die endgültigen Navigationssystem-basierten Spurdaten SPN ermittelt und laufend angepasst, wobei die Wahl der geeigneten Kurvenform (beispielsweise Polygonzug, Polynom zweiter oder dritter Ordnung, Spline o.ä.) sowohl vom Fahrerassistenzsystem FA als auch von der Vorausschauweite abhängen. Hierbei kann das Gleichungssystem zur Kurvenregression, das zunächst nur aus Gleichungen besteht, die die Stützpunktposition selbst beschreiben, um zusätzliche Gleichungen für die erste und zweite Ableitung an jedem Stützpunkt erweitert werden, um Kursrichtung und Kursrichtungsänderung (Gierrate) abzubilden.

Aus den versendeten Spurdaten und/oder je nach Genauigkeit der Positionsdaten und abhängig vom Navigationssystem NAV' ist es möglich, aus der Kollektivbewegung der Fahrzeuge F1-F3 den Verlauf der Straßenfahrbahn ST durch die betreffenden Daten genauer vorherzusagen als durch den beschränkten Datensatz der videobasierten Spurerkennungseinrichtung VE.

Wird mit den Daten eine eindeutige Fahrzeugkennung gesendet, ist es möglich, die Fortbewegung der Fahrzeuge auch über die Zeit zu verfolgen und so Bewegungstrajektorien zu ermitteln. Diese Trajektorien können hilfreich für die Zuordnung der Fahrspuren sein, sind aber nicht notwendig.

Durch eine getrennte Fehlerbetrachtung für jede Gleichung der Kurvenregression können Gleichungen identifiziert werden, die einen besonders großen Fehler zur Ausgleichskurve haben. Die zugehörigen Fahrzeuge folgen in der Regel nicht der Kollektivbewegung der anderen Fahrzeuge auf dieser Spur, beispielsweise wenn ein Fahrzeug in einer Einfahrt abbiegt, die anderen Fahrzeuge aber dem Straßenverlauf weiter folgen, und können daher zur Verbesserung der Kurvenbeschreibung aus der Berechnung der Spurprognose mittels der Spurprognoseeinrichtung SPE herausgenommen werden.

Stellt die Spurprognoseeinrichtung SPE eine Abweichung der tatsächlichen Fahrspur von der jeweiligen prognostizierten Fahrspur fest, gibt sie ein Warnsignal SIG an der Fahrer aus.

Je nach Anwendung sowie Anzahl und Qualität der zur Verfügung stehenden Daten der Fahrzeuge F1 bis F5 können die ermittelten Ausgleichskurven dazu verwendet werden, bei teilweisem Ausfall der videobasierten Spurerkennungseinrichtung, wie im vorliegenden Fall im Markierungsbereich MF, die Spurinformation der videobasierten Sensoreinrichtung VE zu ergänzen bzw. zu ersetzen. Die Dauer der Ergänzung bzw. Ersetzung ist durch die Beurteilung der Qualität der videobasierten Spurdaten VSP möglich. Im vorliegenden Fall kann daher nach Passieren des Markierungsfehlbereichs MF das Fahrzeug F0 und bei hinreichendem Abstand zum Fahrzeug F1 die Spurprognoseeinrichtung SPB die Spurprognosedaten wieder vollständig auf die videobasierte Spurerkennungseinrichtung VP stützen.

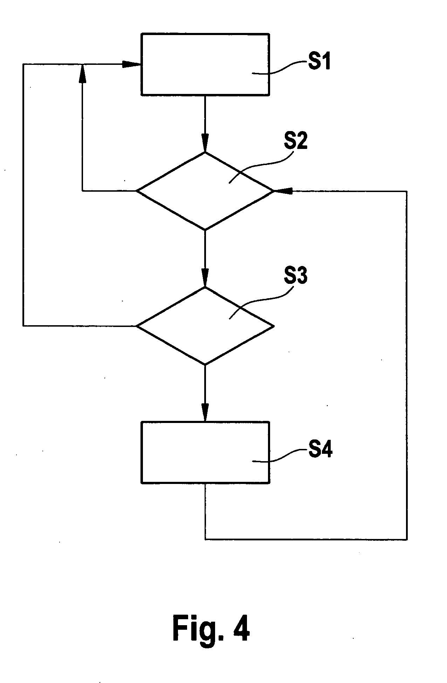

Das zugrunde liegende Verfahren wird nun mit Bezug auf Fig. 4 erläutert, die ein Fliessdiagramm zur Erläuterung der wesentlichen Schritte der Ausführungsform des erfindungsgemäßen Verfahrens zur Fahrerassistenz durch Erzeugung von Spurinformationen zur Unterstützung oder zum Ersatz von Spurinformationen einer videobasierten Spurinformationseinrichtung durch die Ermittlungseinrichtung EE zeigt.

In Schritt S1 wird die videobasierte Spurprognose unter Verwendung der Spurinformationen VSP aktiviert. In Schritt S2 wird überprüft, ob die videobasierte Spurprognose dem vorgegebenen Qualitätskriterium entspricht. Ist dies der Fall, verzweigt das Verfahren zurück zu Schritt S1. Anderenfalls wird in Schritt S3 überprüft, ob Navigations-basierte Spurinformationen von Fremdfahrzeugen, wie z.B. F1-F5, vorliegen. Ist dies nicht der Fall, verzweigt das Verfahren zurück zu Schritt S1. Anderenfalls wird in Schritt S4 wird die Navigations-basierte Spurprognose unter Verwendung der Spurinformationen SPN aktiviert. Anschließend verzweigt das Verfahren zurück zu Schritt S2.

## Patentansprüche

1. Verfahren zur Fahrerassistenz durch Erzeugung von Spurinformationen zur Unterstützung oder zum Ersatz von Spurinformationen einer videobasierten Spurinformationseinrichtung eines Fahrzeuges (F0) mit den Schritten:
Erzeugen der lateralen Spurinformationen basierend auf der videobasierten Spurinformationseinrichtung (VE) des Fahrzeuges (F0);
Ermitteln mindestens eines Zuverlässigkeitsparameters der von der Spurinformationseinrichtung (VE) erhaltenen lateralen Spurinformationen;
Empfangen von Navigationssystem-basierten Spurinformationen insbesondere von Absolutposition, Kursrichtung und Gierrate, von mindestens einem Fremdfahrzeug (F1-F5) über eine Fahrzeug-Fahrzeug-Kommunikationseinrichtung (FFK); und
Unterstützen oder Ersetzen der von der Spurinformationseinrichtung (VE) erhaltenen lateralen Spurinformationen basierend auf den empfangenen Navigationssystem-basierten lateralen Spurinformationen in Abhängigkeit von dem ermittelten Zuverlässigkeitsparameter.

2. Verfahren nach Anspruch 1, **dadurch gekennzeichnet, dass** der Zuverlässigkeitsparameter eine Qualität und/oder eine Reichweite umfasst.

3. Verfahren nach Anspruch 1 oder 2, **dadurch gekennzeichnet, dass** die Navigationssystem-basierten lateralen Spurinformationen von einer Mehrzahl von Fremdfahrzeugen (F1-F5) über die Fahrzeug-Fahrzeug-Kommunikationseinrichtung (FFK) empfangen werden und an ein vorgegebenes Spurmodell angefittet werden.

4. Verfahren nach Anspruch 1, 2 oder 3, **dadurch gekennzeichnet, dass** Navigationssystem-basierte laterale Spurinformationen von mindestens einem entgegenkommenden Fremdfahrzeug (F4, F5) über die Fahrzeug-Fahrzeug-Kommunikationseinrichtung (FFK) empfangen werden und auf die eigene Fahrspur transformiert werden:

5. Verfahren nach Anspruch 3, **dadurch gekennzeichnet, dass** den Navigationssystem-basierten lateralen Spurinformationen von der Mehrzahl von Fremdfahrzeugen (F1-F5) eine jeweilige Kennung entsprechend dem sie aussendenden Fremdfahrzeug zugeordnet wird.

6. Verfahren nach Anspruch 3, **dadurch gekennzeichnet, dass** die Navigationssystem-basierten lateralen Spurinformationen von der Mehrzahl von Fremdfahrzeugen (F1-F5) einer Plausibilisierung hinsichtlich der Fahrtrichtung unterworfen werden.

7. Vorrichtung zur Fahrerassistenz durch Erzeugung von Spurinformationen zur Unterstützung oder zum Ersatz von Spurinformationen einer videobasierten Spurinformationseinrichtung eines Fahrzeuges (F0) mit:
einer videobasierten Spurerkennungseinrichtung (VE) zum Erzeugen der lateralen Spurinformationen basierend auf der videobasierten Spurinformationseinrichtung (VE) des Fahrzeuges (F0);
einer Ermittlungseinrichtung (EE) zum Ermitteln mindestens eines Zuverlässigkeitsparameters der von der Spurinformationseinrichtung (VE) erhaltenen lateralen Spurinformationen;
einer Fahrzeug-Fahrzeug-Kommunikationseinrichtung (FFK) zum Empfangen von Navigationssystem-basierten lateralen Spurinformationen von mindestens einem Fremdfahrzeug (F1-F5); und
wobei die Ermittlungseinrichtung (EE) derart gestaltet ist, dass sie ein Unterstützen oder Ersetzen der von der Spurinformationseinrichtung (VE) erhaltenen lateralen Spurinformationen basierend auf den empfangenen Navigationssystem-basierten lateralen Spurinformationen in Abhängigkeit von dem ermittelten Zuverlässigkeitsparameter veranlasst.

8. Vorrichtung nach Anspruch 7, **dadurch gekennzeichnet, dass** der Zuverlässigkeitsparameter eine Qualität und/oder eine Reichweite umfasst.

9. Vorrichtung nach Anspruch 7 oder 8, **dadurch gekennzeichnet, dass** die Navigationssystem-basierten lateralen Spurinformationen von einer Mehrzahl von Fremdfahrzeugen (F1-F5) über die Fahrzeug-Fahrzeug-Kommunikationseinrichtung (FFK) empfangbar sind und dass die Ermittlungseinrichtung (EE) derart gestaltet ist, dass die empfangenen Spurinformationen von der Mehrzahl von Fremdfahrzeugen (F1-F5) an ein vorgegebenes Spurmodell angefittet werden können.

10. Vorrichtung nach Anspruch 7, 8 oder 9, **dadurch gekennzeichnet, dass** Navigationssystem-basierte laterale Spurinformationen von mindestens einem entgegenkommenden Fremdfahrzeug (F4, F5) über die Fahrzeug-Fahrzeug-Kommunikationseinrichtung (FFK) empfangen werden und dass die Ermittlungseinrichtung (EE) derart gestaltet ist, dass empfangenen Spurinfoimationen von der Mehrzahl von Fremdfahrzeugen (F1-F5) auf die eigene Fahrspur transformiert werden.

11. Vorrichtung nach Anspruch 9, **dadurch gekennzeichnet, dass** den Navigationssystem-basierten lateralen Spurinformationen von der Mehrzahl von Fremdfahrzeugen (F1-F5) eine jeweilige Kennung entsprechend dem sie aussendenden Fremdfahrzeug zugeordnet werden kann..

12. Verfahren nach Anspruch 9, **dadurch gekennzeichnet, dass** die Ermittlungseinrichtung , (EE) derart gestaltet ist, dass die Navigationssystem-basierten lateralen Spurinformationen von der Mehrzahl von Fremdfahrzeugen (F1-F5) einer Plausibilisierung hinsichtlich der Fahrtrichtung unterworfen werden.

## Claims

1. Method for providing driver assistance by generating lane information for supporting or replacing lane information from a video-based lane information device of a vehicle (F0), having the steps:
generation of the lateral lane information on the basis of the video-based lane information device (VE) of the vehicle (F0) ;
determination of at least one reliability parameter of the lateral lane information which is obtained from the lane information device (VE);
reception of navigation-system-based lane information, in particular about the absolute position, direction of the course and yaw rate, of at least one other vehicle (F1-F5) via a vehicle-to-vehicle communication device (FFK); and
assistance or replacement of the lateral lane information obtained from the lane information device (VE), on the basis of the received navigation-system-based lateral lane information as a function of the determined reliability parameter.

2. Method according to Claim 1, **characterized in that** the reliability parameter comprises a quality and/or a range.

3. Method according to Claim 1 or 2, **characterized in that** the navigation-system-based lateral lane information is received from a plurality of other vehicles (F1 - F5) via the vehicle-to-vehicle communication device (FFK) and is fitted to a predefined lane model.

4. Method according to Claim 1, 2 or 3, **characterized in that** navigation-system-based lateral lane information is received from at least one other, oncoming vehicle (F4, F5) via the vehicle-to-vehicle communication device (FFK) and is transformed to the lane of the driver's own vehicle.

5. Method according to Claim 3, **characterized in that** the navigation-system-based lateral lane information from the plurality of other vehicles (F1-F5) is assigned a respective identifier corresponding to the other vehicle transmitting said lane information.

6. Method according to Claim 3, **characterized in that** the navigation-system-based lateral lane information from the plurality of other vehicles (F1-F5) is subjected to plausibility checking with respect to the direction of travel.

7. Device for providing driver assistance by generating lane information for supporting or replacing lane information from a video-based lane information device of a vehicle (F0), having:
a video-based lane-detection device (VE) for generating the lateral lane information on the basis of the video-based lane information device (VE) of the vehicle (F0) ;
a determination device (EE) for determining at least one reliability parameter of the lateral lane information which is obtained from the lane information device (VE);
a vehicle-to-vehicle communication device (FFK) for receiving navigation-system-based lateral lane information from at least one other vehicle (F1-F5); and
wherein the determination device (EE) is configured in such a way that it causes the lateral lane information obtained from the lane information device (VE) to be supported or replaced on the basis of the received navigation-system-based lateral lane information as a function of the determined reliability parameter.

8. Device according to Claim 7, **characterized in that** the reliability parameter comprises a quality and/or a range.

9. Device according to Claim 7 or 8, **characterized in that** the navigation-system-based lateral lane information can be received from a plurality of other vehicles (F1 - F5) via the vehicle-to-vehicle communication device (FFK), and **in that** the determination device (EE) is configured in such a way that the received lane information from the plurality of other vehicles (F1 - F5) can be fitted to a predefined lane model.

10. Device according to Claim 7, 8 or 9, **characterized in that** navigation-system-based lateral lane information is received from at least one other, oncoming vehicle (F4, F5) via the vehicle-to-vehicle communication device (FFK), and **in that** the determination device (EE) is configured in such a way that received lane information from the plurality of other vehicles (F1 - F5) is transformed to the lane of the driver's own vehicle.

11. Device according to Claim 9, **characterized in that** the navigation-system-based lateral lane information from the plurality of other vehicles (F1 - F5) can be assigned a respective identifier corresponding to the other vehicle transmitting said lane information.

12. Method according to Claim 9, **characterized in that** the determination device (EE) is configured in such a way that the navigation-system-based lateral lane information from the plurality of other vehicles (F1 - F5) is subjected to plausibility checking with respect to the direction of travel.

## Revendications

1. Procédé d'assistance au conducteur par génération d'informations de voie en vue d'assister ou en vue de remplacer des informations de voie d'un dispositif d'information de voie vidéo d'un véhicule (F0), comprenant les étapes suivantes :
Génération des informations de voie latérales en se basant sur le dispositif d'information de voie (VE) vidéo du véhicule (F0) ;
Détermination d'au moins un paramètre de fiabilité des informations de voie latérales obtenues de la part du dispositif d'information de voie (VE) ;
Réception d'informations de voie basées sur un système de navigation, notamment de la position absolue, la direction de la route suivie et le taux de lacet, d'au moins un véhicule externe (F1 - F5) par le biais d'un dispositif de communication de véhicule à véhicule (FFK) ; et
Assistance ou remplacement des informations de voies latérales obtenues de la part du dispositif d'information de voie (VE) en se basant sur les informations de voie latérales basées sur un système de navigation reçues en fonction du paramètre de fiabilité déterminé.

2. Procédé selon la revendication 1, **caractérisé en ce que** le paramètre de fiabilité comprend une qualité et/ou une portée.

3. Procédé selon la revendication 1 ou 2, **caractérisé en ce que** les informations de voie latérales basées sur un système de navigation sont reçues par une pluralité de véhicules externes (F1 - F5) par le biais du dispositif de communication de véhicule à véhicule (FFK) et sont adaptées à un modèle de voie prédéfini.

4. Procédé selon la revendication 1, 2 ou 3, **caractérisé en ce que** les informations de voie latérales basées sur un système de navigation sont reçues par au moins un véhicule externe (F4, F5) arrivant en sens inverse par le biais du dispositif de communication de véhicule à véhicule (FFK) et sont transformées en fonction de la voie propre.

5. Procédé selon la revendication 3, **caractérisé en ce qu'**un identifiant respectif, correspondant au véhicule externe qui les a émises, est associé aux informations de voie latérales basées sur un système de navigation par la pluralité de véhicules externes (F1 - F5).

6. Procédé selon la revendication 3, **caractérisé en ce que** les informations de voie latérales basées sur un système de navigation sont soumises par la pluralité de véhicules externes (F1 - F5) à un contrôle de la plausibilité du sens du déplacement.

7. Dispositif d'assistance au conducteur par génération d'informations de voie en vue d'assister ou en vue de remplacer des informations de voie d'un dispositif d'information de voie vidéo d'un véhicule (F0), comprenant :
un dispositif d'information de voie (VE) vidéo pour générer des informations de voie latérales en se basant sur le dispositif d'information de voie (VE) vidéo du véhicule (F0) ;
un dispositif de détermination (EE) pour déterminer au moins un paramètre de fiabilité des informations de voie latérales obtenues de la part du dispositif d'information de voie (VE) ;
un dispositif de communication de véhicule à véhicule (FFK) pour recevoir des informations de voie latérales basées sur un système de navigation de la part d'au moins un véhicule externe (F1 - F5) ; et
le dispositif de détermination (EE) étant configuré de telle sorte qu'il initie une assistance ou un remplacement des informations de voies latérales obtenues de la part du dispositif d'information de voie (VE) en se basant sur les informations de voie latérales basées sur un système de navigation reçues en fonction du paramètre de fiabilité déterminé.

8. Dispositif selon la revendication 7, **caractérisé en ce que** le paramètre de fiabilité comprend une qualité et/ou une portée.

9. Dispositif selon la revendication 7 ou 8, **caractérisé en ce que** les informations de voie latérales basées sur un système de navigation peuvent être reçues par une pluralité de véhicules externes (F1 - F5) par le biais du dispositif de communication de véhicule à véhicule (FFK) et que le dispositif de détermination (EE) est configuré de telle sorte que les informations de voie latérales reçues peuvent être adaptées par la pluralité de véhicules externes (F1 - F5) à un modèle de voie prédéfini.

10. Dispositif selon la revendication 7, 8 ou 9, **caractérisé en ce que** les informations de voie latérales basées sur un système de navigation sont reçues par au moins un véhicule externe (F4, F5) arrivant en sens inverse par le biais du dispositif de communication de véhicule à véhicule (FFK) et que le dispositif de détermination (EE) est configuré de telle sorte que les informations de voie latérales reçues sont transformées par la pluralité de véhicules externes (F1 - F5) en fonction de la voie propre.

11. Dispositif selon la revendication 9, **caractérisé en ce qu'**un identifiant respectif, correspondant au véhicule externe qui les a émises, peut être associé aux informations de voie latérales basées sur un système de navigation par la pluralité de véhicules externes (F1 - F5).

12. Dispositif selon la revendication 9, **caractérisé en ce que** le dispositif de détermination (EE) est configuré de telle sorte que les informations de voie latérales basées sur un système de navigation sont soumises par la pluralité de véhicules externes (F1 - F5) à un contrôle de la plausibilité du sens du déplacement.
